# EUROPEAN PATENT SPECIFICATION

(11) **EP 3 346 659 B1**
(45) Date of publication and mention of the grant of the patent: **18.08.2021**
(21) Application number: 15902532.9
(22) Date of filing: 31.08.2015
(51) Int. Cl.: H04L 29/06, H04L 9/30, H04L 9/08, H04L 9/32

(54) **COMMUNICATION METHOD FOR ELECTRONIC COMMUNICATION SYSTEM IN OPEN ENVIRONMENT**
KOMMUNIKATIONSVERFAHREN FÜR ELEKTRONISCHES KOMMUNIKATIONSSYSTEM IN EINER OFFENEN UMGEBUNG
PROCÉDÉ DE COMMUNICATION DE SYSTÈME DE COMMUNICATION ÉLECTRONIQUE DANS UN ENVIRONNEMENT OUVERT

(43) Date of publication of application: 11.07.2018
(73) Proprietor: Lin, Chien-Hwa, Hsinchu City (TW)
(72) Inventor: Lin, Chien-Hwa, Hsinchu City (TW)
(74) Representative: Viering, Jentschura & Partner mbB Patent- und Rechtsanwälte
(86) International application number: PCT/CN2015/088556
(87) International publication number: WO 2017/035725

(56) References cited:
- WO-A1-2008/061344
- CN-A- 101 938 471
- CN-A- 102 484 583
- CN-A- 104 219 217
- US-A1- 2006 242 411
- US-A1- 2013 042 315
- US-A1- 2015 074 408
- US-A1- 2016 021 076
- None

## Description

### 1. Field of the Invention

The present invention relates to a communication method, and more particularly to a communication method allowing communication of an electronic communication system to be performed in an open environment such that a server of the electronic communication system can authenticate a user that has no account with the server and may allow the user to perform operations with the server, users having accounts with different servers of the electronic communication system in different communication networks may authenticate each other and then communicate across different application systems, and an inviter may invite an invitee to access the inviter's resources saved on a server of the electronic communication system that the invitee has no account with but the invitee's identity can be authenticated by the server of the electronic communication system.

### 2. Description of the Related Art

Conventionally, only users having accounts with a server may utilize services provided by the server. Users having no account with the server cannot utilize services provided by the server.

For example, a user having an account with a school or public library may utilize the resources of the school library or public library. But if the user has no account with a second school or public library, the user cannot utilize the resources of the second school or public library because the user's identity cannot be authenticated by the second school or public library.

Likewise, communication between two users needs to have accounts in the same conventional electronic communication system so that the identities of users can be verified by servers in the conventional electronic communication system before the users make connection for communication. Therefore, electronic message communication can only be performed in a closed environment constituted by such conventional electronic communication system. Taking instant messaging systems as an example, only users having accounts in the same instant messaging system can communicate with each other, and users having accounts in different instant messaging systems are unable to communicate. One fundamental issue that prevents users of different electronic communication systems from communicating with each other is authentication of the users' identities across different electronic communication systems.

Speaking of users, an inviter can invite an invitee to access some resources available to the inviter on a server. If the invitee has no account with the server, currently one typical way is to provide a hyperlink with an access code to the invitee via e-mail. Clicking the hyperlink, the invitee may make connection to the server and access the inviter's resources. However, such a hyperlink could be peeped or intercepted by others. Another way for the invitee to access the inviter's resources is to set up an account with the same server if not yet. Therefore, both the inviter and the invitee need to have accounts with the server and communicate in a close environment.

WO 2008/061344 A1 discloses a system for secure electronic communication services which facilitates encryption of email and other communications transmitted between senders and recipients in different organizations and network domains

US 2006/242411 A discloses a system allowing an intended recipient to determine whether or not to collect the full content of an electronic mail message from the source of the electronic message before it is delivered to the recipient's electronic mailbox, and managing public-secret key pairs of public key cryptography for implementing authentication, certification, and privacy of communication.

According to the present invention, a method as defined in claim 1 is provided. Advantageous embodiments thereof are defined in the dependent claims. Any examples and embodiments of the description not falling within the scope of the claims do not form part of the invention as defined by the independent claim.

To overcome the disadvantages of the conventional method in accordance with the purpose of the invention as embodied and broadly described herein, the present invention provides communication methods allowing a server to authenticate a user's identity even if the user has no account with the server. Therefore, the server may provide services to the user based on policies of the electronic communication system.

For example, a student, who has an account with a school library, may be authenticated by other school libraries that the student has no account with. Therefore, the student may utilize resources at many school libraries based on the policies of the school libraries.

The present invention also allows users having accounts in different electronic communication systems such as different instant messaging systems to authenticate and communicate with each other for textual communication, online chatting, exchanging photos, exchanging files, video communication, etc.

The present invention allows an inviter to invite an invitee to access the inviter's resources saved on a server even if the invitee has no account with the server. The invitee's identity can be authenticated by the server. The inviter's resources can be accessed by the inviter and invitee only. The server cannot access the inviter's resources.

A private-public key pair is used for data privacy between a sender and a recipient so that data won't be revealed to others.

Typical steps of using the private-public key pair for sending data with privacy are as follows:
1. The sender encrypts data with the recipient's public key.
2. The sender sends the encrypted data to the recipient.
3. The recipient decrypts the encrypted data with the recipient's private key to obtain data. Since only the recipient has the recipient's private key, data privacy is sustained.

Typical steps of using private-public key pair for authenticating an identity are as follows:
1. The sender encrypts data with sender's private key.
2. The sender sends the encrypted data to the recipient.
3. The recipient decrypts the encrypted data with the sender's public key. If decryption succeeds, then the sender's identity is authenticated since only the sender has the sender's private key.

For a few reasons in the industry, the recipient's private-public key pair is not used to encrypt and decrypt data directly. Instead, a symmetric key of symmetric cryptography is used to encrypt and decrypt data, and the recipient's private-public key pair is used to encrypt and decrypt the symmetric key for the same purposes of data privacy.

Steps of using the symmetric key and the recipient's private-public key pair for data privacy are as follows:
1. The sender encrypts data with a symmetric key.
2. The sender encrypts the symmetric key with the recipient's public key.
3. The sender sends the encrypted symmetric key and the encrypted data to the recipient.
4. The recipient decrypts the encrypted symmetric key with the recipient's private key to obtain the symmetric key. Only the recipient can get the symmetric key since only the recipient has the recipient's private key.
5. The recipient decrypts the encrypted data with the symmetric key to obtain data.

Instead of using the sender's private-public key pair to encrypt and decrypt data directly for authenticating the identity of the sender, a sender's electronic signature may be generated for authenticating the sender's identity and verifying the content of data. Steps of generating an electronic signature for the sender to endorse the content of data are as follows:
1. The sender generates a message digest (message digest #1) of data using a hash-function algorithm.
2. The sender encrypts the message digest #1 with the sender's private key to generate a sender's electronic signature on the data.
3. The sender sends data and the sender's electronic signature to the recipient.
4. The recipient verifies the sender's electronic signature by decrypting the encrypted message digest #1 with the sender's public key to obtain the message digest #1 and verifying the received data against the message digest #1. If decryption of the encrypted message digest #1 succeeds, then the sender's identity is authenticated. Verification of data is done by generating a message digest (message digest #2) of the received data using the same hash-function algorithm and checking the message digest #2 against the message digest #1. If and only if the message digest #2 is identical to the message digest #1, then the received data is verified.

One way of using private-public key pair for sustaining data privacy and authenticating the sender's identity is as follows:
1. The sender generates a sender's electronic signature on data (data #1) with the sender's private key.
2. The sender generates a data (data #2) containing data #1 and the sender's electronic signature.
3. The sender encrypts the data #2 with a symmetric key to come out an encrypted data #3.
4. The sender encrypts the symmetric key with the recipient's public key to come out an encrypted data #4.
5. The sender generates a data (data #5) containing the encrypted data #4 and the encrypted data #3.
6. The sender sends the data #5 to the recipient.
7. The recipient decrypts the encrypted data #4 with the recipient's private key to obtain the symmetric key. Since only the recipient has the recipient's private key, data privacy is sustained.
8. The recipient decrypts the encrypted data #3 with the symmetric key to obtain data #1 and the sender's electronic signature.
9. The recipient verifies the sender's electronic signature with the sender's public key. If verification succeeds, then the sender's identity is authenticated since only the sender has sender's private key and the content of the data is verified.

Another way of using private-public key pair for the same purposes of sustaining data privacy and authenticating the sender's identity is as follows:
1. The sender encrypts data #1 with a symmetric key to generate an encrypted data #2.
2. The sender encrypts the symmetric key with the recipient's public key to generate an encrypted data #3.
3. The sender generates a data (data #4) containing the encrypted data #3 and the encrypted data #2.
4. The sender generates a sender's electronic signature on the data #4 with the sender's private key.
5. The sender generates a data (data #5) containing the data #4 and the sender's electronic signature.
6. The sender sends the data #5 to the recipient.
7. The recipient verifies the sender's electronic signature with the sender's public key. If verification succeeds, then the sender's identity is authenticated since only the sender has sender's private key and the content of the data #4 is verified. However, parties other than the recipient might obtain data #4 as well regardless whether or not having the sender's public key to authenticate the sender's identity or verify the content of data #4.
8. The recipient decrypts the encrypted data #3 with the recipient's private key to obtain the symmetric key. Data privacy is still sustained since only the recipient has the recipient's private key.
9. The recipient decrypts the encrypted data #2 with the symmetric key to obtain the data #1.

In the description of this document, in order to simplify statements for focusing on the features directly relevant to the present invention, the recipient's private-public key pair is used to encrypt and decrypt data directly for data privacy, the steps may be replaced by using a symmetric key in the actual implementation. And the sender's private-public key pair is used to encrypt and decrypt data directly for authenticating the sender's identity, the steps may be replaced by using a sender's electronic signature in the actual implementation.

Instead of taking the typical steps of using the sender's private-public key pair for authenticating the sender's identity as described in the previous paragraphs, an alternative approach of using the private-public key pairs of the sender and the recipient for sending and returning a verification token to authenticate the identity of the recipient by the sender is as follows:
1. The sender generates a verification token #1 that is a text, a graphic, a sound, a voice, a video, or a combination thereof.
2. The sender encrypts the verification token #1 with the recipient's public key.
3. The sender sends the encrypted verification token #1 to the recipient.
4. The recipient decrypts the encrypted verification token #1 with the recipient's private key to obtain a verification token #2 that is supposed to be identical to the verification token #1.
5. The recipient encrypts the verification token #2 with the sender's public key.
6. The recipient sends the encrypted verification token #2 to the sender.
7. The sender decrypts the encrypted verification token #2 with the sender's private key to obtain the verification token #2.
8. The sender checks the verification token #2 against the verification token #1; if the verification token #2 is identical to the verification token #1, then the recipient's identity is verified.

Other objectives, advantages and novel features of the invention will become more apparent from the following detailed description when taken in conjunction with the accompanying drawings.

### IN THE DRAWINGS

Fig. 1 is a functional block diagram of a first embodiment of an electronic communication system illustrating a first embodiment of a method for communication of the electronic system in an open environment in accordance with the present invention;
Fig. 2 is a functional block diagram of a second embodiment of an electronic communication system illustrating a second embodiment of a method for communication of the electronic system in an open environment in accordance with the present invention;
Fig. 3 is a functional block diagram of the electronic communication system in Fig. 2 illustrating communication of a third embodiment of a method for communication of the electronic system in an open environment in accordance with the present invention;
Fig. 4 is a functional block diagram of the electronic communication system in Fig. 2 illustrating communication of a fourth embodiment of a method for communication of the electronic system in an open environment in accordance with the present invention; and
Fig. 5 is a functional block diagram of the electronic communication system in Fig. 2 illustrating communication of a fifth embodiment of a method for communication of the electronic system in an open environment in accordance with the present invention.

All the drawings illustrate common methods of obtaining a server computer's public key by others, submitting a client device's public key to an administrating server computer that administrates the client device's account, providing the client device's public key by the administrating server computer to others so that authentication may be performed between each other for communication in an open environment. Each drawing illustrates the flow of how data is transferred in details.

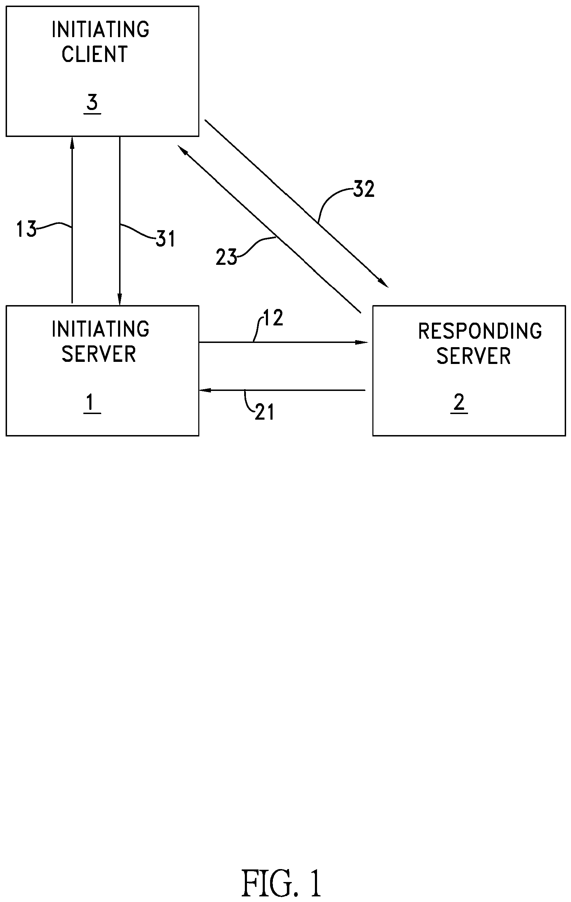

With reference to Fig. 1, a first embodiment of an electronic communication system in accordance with the present invention is shown to illustrate communication for a server to authenticate the identity of a user (initiator) that has no account with the server, and has an initiating server 1, a responding server 2 and an initiating client 3 connected to communication networks.

The initiating server 1 is a host computer administrating an initiator's account with an initiator's account ID (identification). The responding server 2 is a host computer that the initiator has no account with. The initiating client 3 is a local communication device, such as a computer or a mobile phone, used by the initiator with an intent to perform operations with the responding server 2.

Each of the initiating server 1 and the responding server 2 is assigned with a unique name, such as a domain name that is registered with authoritative organizations and can be used for establishing a connection thereto.

The initiating server 1, the responding server 2, and the initiating client 3 all are capable of generating private-public key pairs, encrypting and decrypting electronic messages using public key cryptography, and creating message digests of electronic messages using hash-function algorithms.

Each of the initiating client 3, the initiating server 1, and the responding server 2 generates a private-public key pair and keeps a private key of the private-public key pair. The initiating server 1 may send e-mails to the initiating client 3.

A first embodiment of a method for communication of the electronic communication system in an open environment is performed by the electronic communication system and includes a public key acquisition process and a client identity authentication process.

The public key acquisition process serves for the initiating client 3 and the initiating server 1 (the responding server 2) to have the public key of the responding server 2 (the initiating server 1) and has the following steps.

Step 101: The responding server 2 (initiating server 1) provides the public key of the responding server 2 (initiating server 1) at a web site for download. The web site has a unique name, such as a domain name that is registered with authoritative organizations and can be used for establishing a connection thereto.

Step 102: Any one of the initiating client 3 and the initiating server 1 (responding server 2) may download the public key of the responding server 2 (initiating server 1) from the web site using the unique name of the responding server 2 (initiating server 1).

Instead of downloading the public key of the responding server 2 (initiating server 1) from a web site, the responding server 2 (initiating server 1) may provide the public key of the responding server 2 (initiating server 1) to any one that makes connection to the responding server 2 (initiating server 1) using the unique name of the responding server 2 (initiating server 1).

After the initiating client 3 downloads the public key of the initiating server 1 as described in the previous paragraphs, the public key acquisition process further has the following steps for the initiating server 1 to have the public key of the initiating client 3.

Step 201: The initiating server 1 generates an activation token (activation token #1) containing a text, a graphic, a sound, a voice, a video, or a combination thereof.

Step 202: The initiating server 1 generates an electronic signature on the activation token #1 with the private key of the initiating server 1.

Step 203: The initiating server 1 generates data (data #1) containing the activation token #1, the electronic signature and a portion of the initiator's account ID that may be recognized by the initiator without revealing the full initiator's account ID.

Step 204: The initiating server 1 provides data #1 to the initiator such as via e-mailing. The initiator moves the activation token #1 and the electronic signature to the initiating client 3 if the received data #1 is not on the initiating client 3.

Step 205: The initiating client 3 verifies the electronic signature with the public key of the initiating server 1. If the verification fails, then the process terminates; otherwise, the process proceeds to the next step.

Step 206: The initiating client 3 makes connection to the initiating server 1.

Step 207: The initiating client 3 generates data (data #2) containing the initiator's account ID, activation token #2, and the public key of the initiating client 3.

Step 208: The initiating client 3 encrypts data #2 with the public key of the initiating server 1.

Step 209. The initiating client 3 sends the encrypted data #2 to the initiating server 1. Such flow of the data #2 is represented by an information flow 31 in Fig. 1.

Step 210: The initiating server 1 decrypts the encrypted data #2 with the private key of the initiating server 1 to obtain the initiator's account ID, activation token #2, and the public key of the initiating client 3.

Step 211: The initiating server 1 checks the activation token #2 against the activation token #1. If the activation token #2 is identical to the activation token #1, the initiating server 1 keeps the public key of the initiating client 3 to be associated with the initiator's account ID.

Based on the above description, some of the major advantages of the public key acquisition process can be summarized as follows.
1. By verifying the electronic signature of the initiating server 1, the initiating client 3 may authenticate the identity of the initiating server 1 that provides the activation token #1 and ensure the validity of the activation token #1.
2. The data #1 contains only a portion of the initiator's account ID that may be recognized by initiator without revealing the full initiator's account ID for security to a degree.
3. Even if the activation token #1 is intercepted by others, the interceptor might not be able to get the public key of the initiating server 1 in a timely fashion that is required for the encryption of the data #2.
4. The data #2 containing the full initiator's account ID and the activation token #2 is encrypted with the public key of the initiating server 1. Only the initiating server 1 has the private key of the initiating server 1 to obtain the initiator's account ID for verifying the activation token #2 against the activation token #1.

Instead of using the activation token to authenticate the identity of the initiating client 3 when the initiating client 3 provides the public key of the initiating client 3 to the initiating server 1, an account password of the initiating client 3 may be used as in the following steps.

Step 301: The initiating client 3 makes connection to the initiating server 1.

Step 302: The initiating client 3 generates data (data #1) containing the initiator's account ID, the account password, and the public key of the initiating client 3.

Step 303: The initiating client 3 encrypts data #1 with the public key of the initiating server 1.

Step 304: The initiating client 3 sends the encrypted data #1 to the initiating server 1. Such flow of the data #1 is represented by an information flow 31 in Fig. 1.

Step 305: The initiating server 1 decrypts the encrypted data #1 with the private key of the initiating server 1 to obtain the initiator's account ID, the account password, and the public key of the initiating client 3.

Step 306: The initiating server 1 verifies the account password, and then keeps the public key of the initiating client 3 to be associated with the initiator's account ID.

After the initiating server 1, the responding server 2 and the initiating client 3 have the public keys of the initiating server 1, the responding server 2 and the initiating client 3 as described in the previous paragraphs with the exception that the responding server 2 doesn't have the public key of the initiating client 3. The client identity authentication process serves for the responding server 2 to authenticate the identity of the initiating client 3 when the initiating client 3 intends to perform operations with the responding server 2, has the following steps.

Step 401: The initiating client 3 makes connection to the responding server 2.

Step 402: The initiating client 3 generates data (data #1) containing the initiator's account ID and the unique name of the initiating server 1.

Step 403: The initiating client 3 sends the data #1 to the responding server 2. Such flow of the data #1 is represented by an information flow 32 in Fig. 1.

Step 404: The responding server 2 establishes a connection to the initiating server 1 based on the unique name of the initiating server 1.

Step 405: The responding server 2 generates data (data #2) containing the initiator's account ID.

Step 406: The responding server 2 sends data #2 to the initiating server 1. Such flow of the data #2 is represented by an information flow 21 in Fig. 1.

Step 407: Based on the initiator's account ID, the initiating server 1 generates data (data #3) containing the public key of the initiating client 3.

Step 408: The initiating server 1 sends data #3 to the responding server 2 using the private-public key pair of the initiating server 1 for authenticating the identity of the initiating server 1. Such flow of the data #3 is represented by an information flow 12 in Fig. 1.

Step 409: The responding server 2 generates a verification token containing a text, a graphic, a sound, a voice, a video, or a combination thereof.

Step 410: The responding server 2 sends the verification token to the initiating client 3 using the private-public key pairs of the responding server 2 and the initiating client 3 for verifying the identity of the initiating client 3; if the verification succeeds, then the responding server 2 may allow the initiating client 3 to perform further operations with the responding server 2.

If it is necessary to keep the initiator's account ID private so that the responding server 2 or others cannot know, a few steps in the client identity authentication process may be revised as follows:
Step 402': The initiating client 3 encrypts the initiator's account ID with the public key of the initiating server 1. Data #1 contains the encrypted initiator's account ID and the unique name of the initiating server 1.
Step 405': The responding server 2 generates data (data #2) containing the encrypted initiator's account ID instead of the initiator's account ID.
Step 406': After obtaining data #2, which is the encrypted initiator's account ID, the initiating server 1 further decrypts the encrypted initiator's account ID with the private key of the initiating server 1 to obtain the initiator's account ID.

Based on the above description, some of the major advantages of the client identity authentication process can be summarized as follows.
1. The responding server 2 obtains the public key of the initiating client 3 from the initiating server 1. The initiating server 1 administrates the account of the initiator using the initiating client 3 and is the most authoritative entity to provide the public keys for account holders thereof.
2. There is no need for any third party to involve in activities, such as providing the public key of the initiating client 3 or certifying the public key of the initiating client 3.
3. The public key of the initiating client 3 is provided by encryption with the private key of the initiating server 1 to ensure validity by the initiating server 1.
4. In the event that the initiating client 3 sends the initiator's account ID encrypted with public key of the initiating server 1 to the responding server 2, the responding server 2 cannot know the initiator's account ID. Also, the initiator's account ID won't be eavesdropped by others during data transfer.
5. Using the verification token to verify the identity of the initiating client 3 by the responding server 2 allows the responding server 2 to initiate the verification process after obtaining the public key of the initiating client 3 from the initiating server 1. Otherwise, extra steps will be needed for the responding server 2 to request the initiating client 3 to initiate the verification process by sending redundant data from the initiating client 3 to the responding server 2 using the private-public key pair of the initiating client 3.
6. As long as a client has an account with a server (server #1), the identity of the client may be authenticated by another server (server #2) that the client has no account with; and server #2 may allow the client to perform operations with server #2. Therefore, communication may be performed in an open environment rather than in a closed environment that only client having an account with a server can perform operations with the server.

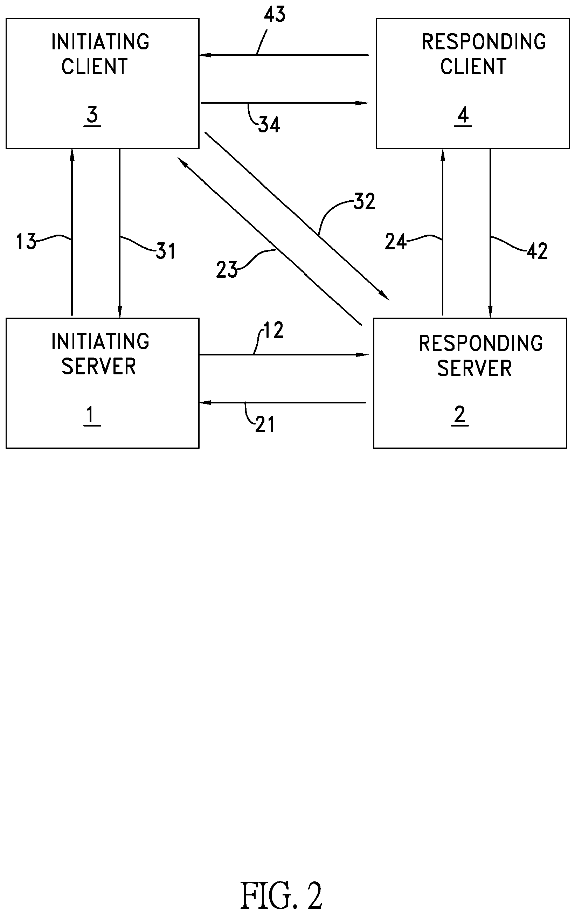

With reference to Fig. 2, a second embodiment of an electronic communication system in accordance with the present invention is shown to illustrate communication for two users having accounts with different servers in different communication networks to communicate with each other, and differs from the first embodiment of the electronic communication system in having an additional responding client 4. The initiating server 1, the responding server 2, the initiating client 3 and the responding client 4 are connected to the communication networks.

The responding client 4 is a local communication device, such as a computer or a mobile phone, used by a user (responder) that the user (initiator) of the initiating client 3 intends to communicate with. The initiator knows a responder's account ID of a responder's account that is administrated by the responding server 2. The initiator's account ID optionally contains an initiator's name for easier recognition of the initiator by the responder. The responding client 4 monitors electronic messages from the responding server 2 at regular time, and is capable of generating a private-public key pair and keeping a private key of the responding client 4, encrypting and decrypting the electronic messages using the public key cryptography, and creating message digests of the electronic messages using hash-function algorithms.

A second embodiment of a method for communication of the electronic communication system in an open environment is performed by the electronic communication system and includes a public key acquisition process and a client identity authentication process.

The public key acquisition process includes steps for the responding client 4 to have the public key of the responding server 2 that are similar to the steps of obtaining the public key of the responding server 2 by anyone from a web site of the responding server 2 in the first embodiment of the method, steps for the responding server 2 to have the public key of the responding client 4 that are similar to the steps of obtaining the public key of the initiating client 3 by the initiating server 1 in the first embodiment of the method, and steps of obtaining the public key of the initiating client 3 by the responding server 2 are described in the first embodiment of the method.

The client identity authentication process for the initiator and the responder to authenticate and communicate with each other differs from that of the first embodiment of the method in further having the following steps.

Step 501: The initiating client 3 makes connection to the responding server 2 if not yet.

Step 502: The initiating client 3 generates data (data #1) containing the responder's account ID and the initiator's account ID.

Step 503: The initiating client 3 sends data #1 to the responding server 2 using the private-public key pair of the initiating client 3 and the private-public key pair of the responding server 2 for sustaining data privacy and authenticating the identity of the initiating client 3. Such flow of the data #1 is represented by an information flow 31 in Fig. 2.

Step 504: The responding server 2 generates data (data #2) containing the public key of the responding client 4 based on the responder's account ID.

Step 505: The responding server 2 sends data #2 to the initiating client 3 using the private-public key pair of the responding server 2 and the private-public key pair of the initiating client 3 for sustaining data privacy and authenticating the identity of the responding server 2. Such flow of the data #2 is represented by an information flow 23 in Fig. 2.

Step 506: The responding server 2 detects an IP Address of the initiating client 3.

Step 507: The responding server 2 generates data (data #3) containing the initiator's account ID, the IP Address of the initiating client 3, and the public key of the initiating client 3.

Step 508: The responding server 2 sends data #3 to the responding client 4 using the private-public key pair of the responding server 2 and the private-public key pair of the responding client 4 for sustaining data privacy and authenticating the identity of the responding server 2. Such flow of the data #3 is represented by an information flow 24 in Fig. 2.

Step 509: Based on the initiator's account ID, the responder determines whether or not to accept the initiator's invitation. If a decision is made not to accept, process terminates; otherwise, the process proceeds to the following steps.

Step 510: The responding client 4 makes connection to the initiating client 3 based on the IP Address of the initiating client 3.

Step 511: The responding client 4 generates a verification token (verification token #1) containing a text, a graphic, a sound, a voice, a video, or a combination thereof.

Step 512: The responding client 4 generates data (data #4) containing the responder's account ID and the verification token #1.

Step 513: The responding client 4 sends data #4 to the initiating client 3 using the private-public key pair of the responding client 4 and the private-public key pair of the initiating client 3 for sustaining data privacy and authenticating the identity of the responding client 4. Such flow of the data #4 is represented by an information flow 43 in Fig. 2.

Step 514: The initiating client 3 checks if the responder's account ID is what the initiating client 3 intends to communicate with. If not, the process terminates; otherwise, the process proceeds to a next step.

Step 515: The initiating client 3 generates data (data #5) containing the verification token #1 as a verification token #2.

Step 516: The initiating client 3 sends data #5 to the responding client 4 using the private-public key pair of the initiating client 3 and the private-public key pair of the responding client 4 for sustaining data privacy and authenticating the identity of the initiating client 3. Such flow of the data #5 is represented by an information flow 34 in Fig. 2.

Step 517: The responding client 4 checks the verification token #2 against the verification token #1. If the verification token #2 is identical to the verification token #1, the responding client 4 and the initiating client 3 may begin communication based on common communication protocols.

Some examples of common communication protocols may be as follows:
SEND TEXT UNICODE text-data
SEND GRAPHIC JPG image-data
SEND VOICE CODEC G.711_64 voice-data
SEND VIDEO CODEC H.263/MPEG-4_Part2 video-data

Based on the above description, there are many advantages available for two users to communicate with each other. Some of the major advantages are:
1. Even though the users have accounts in different electronic communication systems, they may communicate with each other via connection of the invitee's server by the inviter.
2. At the very beginning, when the initiating client 3 sends data #1 with the initiator's intent of communicating with the responder, the responding server 2 authenticates the identity of the initiating client 3 before proceeding to the following steps.
3. Prior to the intended communication, each user authenticates the identity of the other party using the public key of the other party that is provided by the other party's server, the most authoritative entity to provide the public keys for account holders thereof.
4. The sent data is encrypted with the private-public key pairs for data privacy and authentication of the sender.

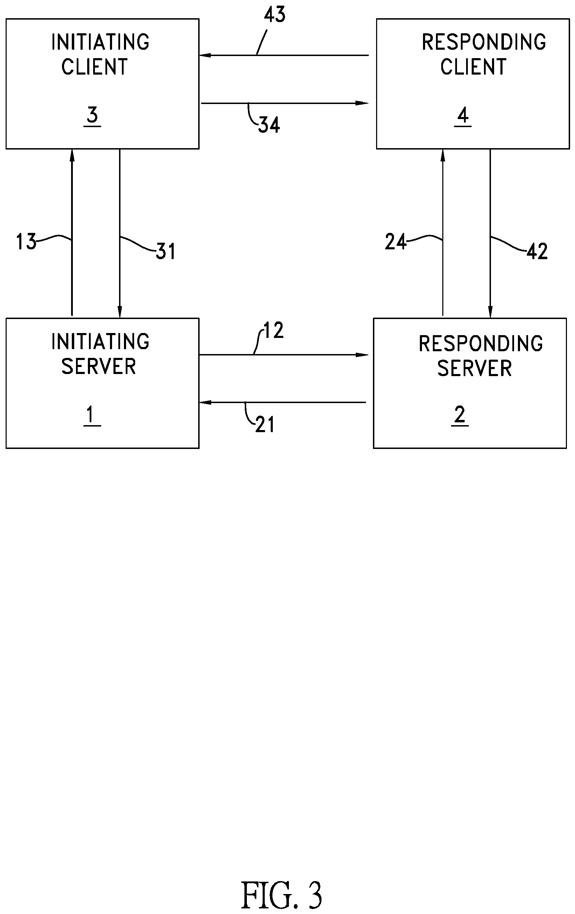

With reference to Fig. 3, the electronic communication system in Fig. 2 is shown. In the electronic communication system, instead of making connection to the responding server 2 for inviting the responding client 4 to have communication, the initiating client 3 passes the invitation via the initiating server 1.

A third embodiment of a method for communication of the electronic communication system in an open environment is performed by the electronic communication system and differs from the second embodiment of the method in having the following alternative steps for initiator and responder to communicate with each other.

Step 601: The initiating client 3 generates data (data #1) containing the unique name of the responding server 2, the responder's account ID and the initiator's account ID.

Step 602: The initiating client 3 sends data #1 to the initiating server 1 using the private-public key pair of the initiating client 3 and the private-public key pair of the initiating server 1 for sustaining data privacy and authenticating the identity of the initiating client 3. Such flow of the data #1 is represented by an information flow 31 in Fig. 3.

Step 603: The initiating server 1 detects an IP Address of the initiating client 3.

Step 604: The initiating server 1 generates data (data #2) containing the responder's account ID, the initiator's account ID, the IP Address of the initiating client 3 and the public key of the initiating client 3.

Step 605: The initiating server 1 makes connection to the responding server 2 based on the unique name of the responding server 2.

Step 606: The initiating server 1 sends data #2 to the responding server 2 using the private-public key pair of the initiating server 1 and the private-public key pair of the responding server 2 for sustaining data privacy and authenticating the identity of the initiating server 1. Such flow of the data #2 is represented by an information flow 12 in Fig. 3.

Step 607: The responding server 2 generates data (data #3) containing the public key of the responding client 4 based on the responder's account ID.

Step 608: The responding server 2 sends data #3 to the initiating server 1 using the private-public key pair of the responding server 2 and the private-public key pair of the initiating server 1 for sustaining data privacy and authenticating the identity of the responding server 2. Such flow of the data #3 is represented by an information flow 21 in Fig. 3.

Step 609: The initiating server 1 generates data (data #4) containing the public key of the responding client 4.

Step 610: The initiating server 1 sends data #4 to the initiating client 3 using private-public key pair of the initiating server 1 and private-public key pair of the initiating client 3 for sustaining data privacy and authenticating the identity of the initiating server 1. Such flow of the data #4 is represented by an information flow 13 in Fig. 3.

Step 611: The responding server 2 generates data (data #5) containing the initiator's account ID, the IP Address of the initiating client 3 and the public key of the initiating client 3.

Step 612: The responding server 2 sends data #5 to the responding client 4 using the private-public key pair of the responding server 2 and the private-public key pair of the responding client 4 for sustaining data privacy and authenticating the identity of the responding server 2. Such flow of the data #5 is represented by an information flow 24 in Fig. 3.

Step 613: Based on the initiator's account ID, the responder determines whether or not to accept the initiator's invitation. If a decision is made not to accept, the process terminates; otherwise, the process proceeds to the next step.

Step 614: The responding client 4 makes connection to the initiating client 3 based on the IP Address of the initiating client 3.

Step 615: The responding client 4 generates a verification token containing a text, a graphic, a sound, a voice, a video, or a combination thereof.

Step 616: The responding client 4 sends the verification token to the initiating client 3 using the private-public key pairs of the responding client 4 and the initiating client 3 for verifying the identity of the initiating client 3. Those flows for verifying the identity of the initiating client 3 are represented by information flows 43, 34 in Fig. 3. If the verification fails, the process terminates; otherwise, the process proceeds to the next step.

Step 617: The responding client 4 generates data (data #6) containing the responder's account ID.

Step 618: The responding client 4 sends data #6 to the initiating client 3 using the private-public key pair of the responding client 4 and the private-public key pair of the initiating client 3 for sustaining data privacy and authenticating the identity of the responding client 4. Such flow of the data #6 is represented by an information flow 43 in Fig. 3.

Step 619: The initiating client 3 checks if the responder's account ID is what the initiating client 3 intends to communicate with. If yes, the initiating client 3 and the responding client 4 may begin communication based on common communication protocols.

Based on the above description, there are many advantages in the present method for two users to communicate with each other via both the servers of the users. Some of the major advantages of the present method are:
1. Even if the users have accounts in different electronic communication systems, they may communicate with each other via the inviter's server and the invitee's server.
2. At the very beginning, when the initiating client 3 sends data #1 with the initiator's intent of communicating with the responder, the initiating server 1 authenticates the identity of the initiating client 3 before proceeding to the next step.
3. Prior to the intended communication, both users mutually authenticate the identity of the other party using the public key of the other party that is provided by the other party's server, the most authoritative entity to provide the public keys for account holders thereof.
4. The sent data is encrypted with the private-public key pairs for data privacy and authentication of the sender.
5. Both users get all the needed information of the other party via their own servers that the users might be more familiar with.
6. After the responding client 4 makes connection to the initiating client 3 based on the IP Address of the initiating client 3, steps of mutual authentication of the initiating client 3 and the responding client 4 may be different from those stated in the second embodiment depending on if the responding client 4 or the initiating client 3 will start communication right after mutual authentication.

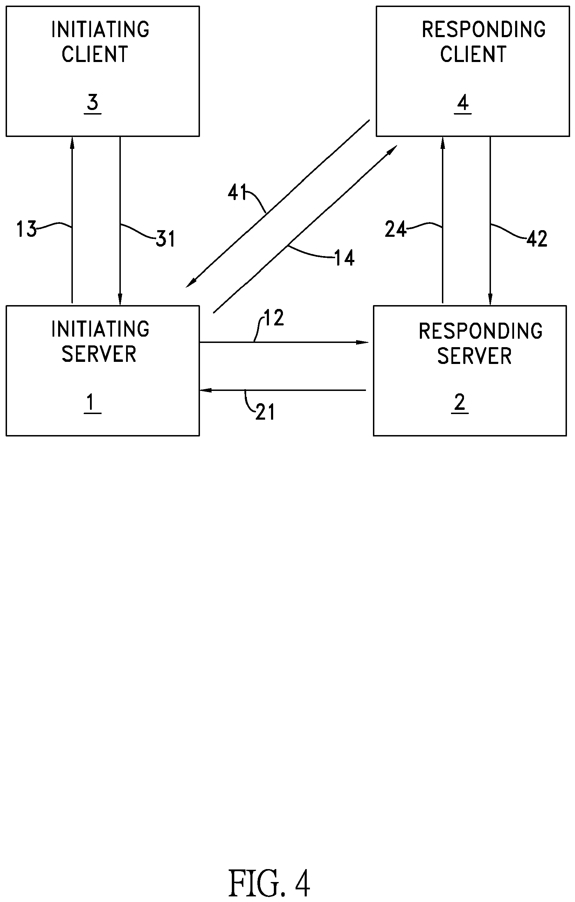

With reference to Fig. 4, the electronic communication system in Fig. 2 is shown to illustrate communication for an inviter (initiator) to invite an invitee (responder) to access the initiator's resources saved on the initiator's server that the responder has no account with while the initiator's server cannot access the initiator's resources.

A fourth embodiment of a method for communication of the electronic communication system in an open environment is performed by the electronic communication system, and has the following steps for the initiator to save the initiator's resources on the initiator's server prohibiting the initiator's server from accessing the initiator's resources.

Step 701: The initiating client 3 creates resources containing text, graphic, sound, voice, audio, video, or a combination thereof.

Step 702: The initiating client 3 encrypts the resources with a symmetric key.

Step 703: The initiating client 3 sends the encrypted resources to the initiating server 1.

Step 704: The initiating server 1 keeps the encrypted resources.

Based on the above description, there are many advantages of the present method for saving client's resources on the server. One of the major advantages is:
The initiating server 1 cannot access the initiator's resources since the initiating server 1 doesn't have the symmetric key to decrypt the encrypted resources.

If the initiating client 3 doesn't have the public key of the responding client 4, the present method includes the following steps for the initiating client 3 to have the public key of the responding client 4.

Step 801: The initiating client 3 generates data (data #1) containing a unique name of the responding server 2 and the responder's account ID.

Step 802: The initiating client 3 sends data #1 to the initiating server 1. Such flow of the data #1 is represented by an information flow 31 in Fig. 4.

Step 803: The initiating server 1 generates data (data #2) containing the responder's account ID.

Step 804: The initiating server 1 makes connection to the responding server 2 based on the unique name of the responding server 2.

Step 805: The initiating server 1 sends data #2 to the responding server 2. Such flow of the data #2 is represented by an information flow 12 in Fig. 4.

Step 806: The responding server 2 generates data (data #3) containing the responder's account ID and the public key of the responding client 4 based on the responder's account ID.

Step 807: The responding server 2 encrypts data #3 with the private key of the responding server 2.

Step 808: The responding server 2 sends the encrypted data #3 to the initiating server 1. Such flow of the data #3 is represented by an information flow 21 in Fig. 4

Step 809: The initiating server 1 decrypts the encrypted data #3 with the public key of the responding server 2 to obtain and keep the responder's account ID and the public key of the responding client 4.

Step 810: The initiating server 1 generates data (data #4) containing the public key of the responding client 4.

Step 811: The initiating server 1 encrypts data #4 with the private key of the initiating server 1.

Step 812: The initiating server 1 sends data #4 to the initiating client 3. Such flow of the data #4 is represented by an information flow 13 in Fig. 4.

Step 813: The initiating client 3 decrypts the encrypted data #4 with the public key of the initiating server 1 to obtain the public key of the responding client 4.

Based on the above description, there are many advantages of the present method, and some of the major advantages are:
1. The initiating client 3 obtains the public key of the responding client 4 via the initiating server 1 from the responding server 2 that administrates the account of the responder using the responding client 4 and is the most authoritative entity to provide public keys for account holders thereof.
2. Sending the public key of the responding client 4 to the initiating client 3 is ensured by authenticating the identities of the responding server 2 and the initiating server 1 using the private-public key pairs of the responding server 2 and the initiating server 1.

Once the initiating client 3 has the public key of the responding client 4, the present method has the following steps for the responding client 4 to access the resources of the initiating client 3 saved on the initiating server 1.

Step 901: The initiating client 3 encrypts the symmetric key, which was used to encrypt the initiator's resources for saving on the initiating server 1 as described in the previous paragraphs, with the public key of the responding client 4.

Step 902: The initiating client 3 generates data (data #1) containing the initiator's account ID, the unique name of the responding server 2, the responder's account ID, and the encrypted symmetric key.

Step 903: The initiating client 3 sends data #1 to the initiating server 1 using the private-public key pair of the initiating client 3 and the private-public key pair of the initiating server 1 for sustaining data privacy and authenticating the identity of the initiating client 3. Such flow of the data #1 is represented by an information flow 31 in Fig. 4.

Step 904: The initiating server 1 generates data (data #2) containing the responder's account ID, the unique name of the initiating server 1, the initiator's account ID and the encrypted symmetric key.

Step 905: The initiating server 1 makes connection to the responding server 2 based on the unique name of the responding server 2.

Step 906: The initiating server 1 sends data #2 to the responding server 2 using the private-public key pair of the initiating server 1 and the private-public key pair of the responding server 2 for sustaining data privacy and authenticating the identity of the initiating server 1. Such flow of the data #2 is represented by an information flow 12 in Fig. 4.

Step 907: The responding server 2 generates data (data #3) containing the unique name of the initiating server 1, the initiator's account ID and the encrypted symmetric key.

Step 908: Based on the responder's account ID, the responding server 2 sends data #3 to the responding client 4 using the private-public key pair of the responding server 2 and the private-public key pair of the responding client 4 for sustaining data privacy and authenticating the identity of the responding server 2. Such flow of the data #3 is represented by an information flow 24 in Fig. 4.

Step 909: The responding client 4 makes connection to the initiating server 1 based on the unique name of the initiating server 1.

Step 910: The responding client 4 generates data (data #4) containing the initiator's account ID and the responder's account ID.

Step 911: Since the initiating server 1 keeps the responder's account ID and the public key of the responding client 4 as in the previous description of obtaining public key of the responding client 4 by the initiating client 3, the responding client 4 may send data #4 to the initiating server 1 using the private-public key pair of the responding client 4 for authenticating the identity of the responding client 4. Such flow of the data #4 is represented by an information flow 41 in Fig. 4. If the authentication fails, then the process terminates; otherwise, the process proceeds to the next step.

Step 912: Based on the initiator's account ID and the responder's account ID, the initiating server 1 sends the encrypted initiator's resources, which is sent by the initiating client 3 and saved on the initiating server 1 as described in the previous paragraphs for saving the initiator's resources on the initiator's server, to the responding client 4. Such flow of sending the encrypted initiator's resources is represented by an information flow 14 in Fig. 4.

Step 913: The responding client 4 decrypts the encrypted symmetric key with the private key of the responding client 4 to obtain the symmetric key.

Step 914: The responding client 4 decrypts the encrypted initiator's resources with the symmetric key to obtain the initiator's resources.

Based on the above description, there are many advantages of the present method for responder, who has no account with the initiator's server but can be authenticated by the server, to access initiator's resources that are saved on initiator's server. Some of the major advantages are:
1. The initiator's resources are encrypted with a symmetric key for data privacy so that no one can obtain the initiator's resources without the symmetric key.
2. Only the responder invited by the initiator can get the symmetric key with the responder's private key.
3. Only the responder invited by the initiator can access the initiator's resources by decrypting the encrypted initiator's resources with the symmetric key.
4. Even if the initiator's server cannot access the initiator's resources, the initiator's server can authenticate the identity of the responder for allowing the responder to have the encrypted initiator's resources even if the responder has no account with the initiator's server.

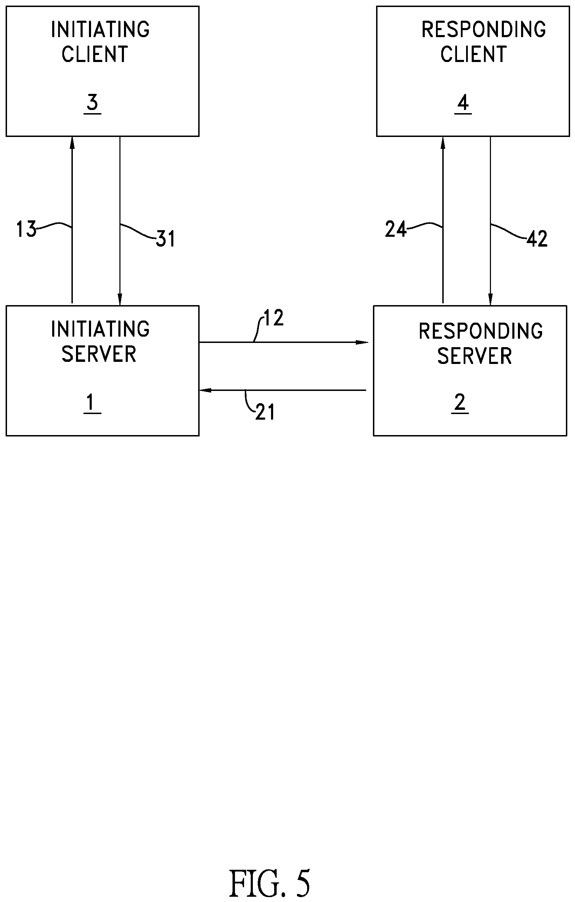

With reference to Fig. 5, the electronic communication system in Fig. 4 is shown to illustrate communication for the initiator's resources to be sent to the responder via the initiator's server and the responder's server instead of letting the responder make connection to the initiator's server and access the initiator's resources from the initiator's server.

A fifth embodiment of a method for communication of the electronic communication system in an open environment is performed by the electronic communication system, and has steps for the initiator to save the initiator's resources on the initiator's server prohibiting the initiator's server from accessing the initiator's resources and steps for the initiating client 3 to get public key of the responding client 4 being the same as those in the fourth embodiment of the method.

The present method further has the following steps for sending the initiator's resources, which are saved on the initiating server 1, to the responding client 4.

Step 1001: the initiating client 3 encrypts the symmetric key, which was used to encrypt the initiator's resources before saving on the initiating server 1 as described in the previous paragraphs, with the public key of the responding client 4.

Step 1002: the initiating client 3 generates data (data #1) containing the initiator's account ID, the unique name of responding server 2, the responder's account ID, and the encrypted symmetric key.

Step 1003: The initiating client 3 sends data #1 to the initiating server 1 using the private-public key pair of the initiating client 3 and the private-public key pair of the initiating server 1 for sustaining data privacy and authenticating the identity of the initiating client 3. Such flow of the data #1 is represented by an information flow 31 in Fig. 5.

Step 1004: The initiating server 1 generates data (data #2) containing the responder's account ID, the initiator's account ID, the encrypted symmetric key and the encrypted initiator's resources based on the initiator's account ID.

Step 1005: The initiating server 1 makes connection to the responding server 2 based on the unique name of the responding server 2.

Step 1006: the initiating server 1 sends data #2 to the responding server 2 using the private-public key pair of the initiating server 1 and the private-public key pair of the responding server 2 for sustaining data privacy and authenticating the identity of the initiating server 1. Such flow of the data #2 is represented by an information flow 12 in Fig. 5.

Step 1007: The responding server 2 generates data (data #3) containing the initiator's account ID, the encrypted symmetric key and the encrypted initiator's resources.

Step 1008: Based on the responder's account ID, the responding server 2 sends data #3 to the responding client 4 using the private-public key pair of the responding server 2 and the private-public key pair of the responding client 4 for sustaining data privacy and authenticating the identity of the responding server 2. Such flow of the data #3 is represented by an information flow 24 in Fig. 5.

Step 1009: The responder checks the initiator's account ID. If the responder is not interested in getting the initiator's resources, then the process terminates; otherwise, the process proceeds to the next step.

Step 1010: The responding client 4 decrypts the encrypted symmetric key with the private key of the responding client 4 to obtain the symmetric key.

Step 1011: The responding client 4 decrypts the encrypted initiator's resources with the symmetric key to obtain the initiator's resources.

Based on the above description, there are many additional advantages of the present method for the responder to obtain the initiator's resources that are saved on the initiator's server. Some of the major advantages are:
1. The initiator's resources are encrypted with a symmetric key for data privacy so that no one can obtain the initiator's resources without the symmetric key.
2. Only the responder invited by the initiator can get the symmetric key with the responder's private key.
3. Only the responder invited by the initiator can access the initiator's resources by decrypting the encrypted initiator's resources with the symmetric key.
4. Even if the initiator's server cannot access the initiator's resources, the initiator's resources are sent to the responder instead of waiting for the responder to access the initiator's server so that the initiator's server doesn't need to keep the initiator's resources for too long.

The present invention provides electronic communication systems and methods applicable in an open environment allowing a user to perform operations with a server that the user has no account with but the identity of the user can be authenticated by the server, also allowing two users having accounts with different servers in different electronic communication systems to authenticate and communicate with each other, and allowing an invitee to access an inviter's resources saved on the inviter's server that the invitee has no account with.

While the above description contains many specifications, these should not be construed as limitations on the scope of the invention, but rather as an exemplification of preferred embodiments thereof. Many other variations are possible based on the principles of the invention. For example, the inviter's resources may be sent from the initiating client 3 via the initiating server 1 rather than from the initiating server 1 with resources that was already saved on the initiating server 1. Another example is: sending the inviter's resources to the invitee may be deviated as remitting fund.

Even though numerous characteristics and advantages of the present invention have been set forth in the foregoing description, together with details of the structure and function of the invention, the disclosure is illustrative only. Changes may be made in detail, especially in matters of shape, size, and arrangement of parts within the principles of the invention to the full extent indicated by the broad general meaning of the terms in which the appended claims are expressed.

## Claims

1. A method allowing communication to be performed in an open environment, the method being performed by an electronic communication system that includes an initiating client (3), an initiating server (1), a responding client (4) and a responding server (2), wherein the initiating client (3) is a local communication device and is used by an initiating user that has an initiating account administrated by the initiating server (1) as a server computer, the responding client (4) is another local communication device and is used by a responding user that has a responding account administrated by the responding server (2) as a server computer, the initiating server (1), the responding server (2), the initiating client (3) and the responding client (4) are connected to communication networks, each of the initiating server (1), the responding server (2), the initiating client (3) and the responding client (4) has a private-public key pair, the initiating server (1) has a unique name assigned and registred with authorities for making connection to the initiating server (1), and the responding server (2) has a unique name assigned and registered with the authorities for making connection to the responding server (2); wherein, the method comprises the steps of:
the initiating client (3) providing an initiating client's public key of the initiating client's private-public key pair to the initiating server (1) by making connection to the initiating server (1) using the initiating server's unique name;
the responding client (4) providing a responding client's public key of the responding client's private-public key pair to the responding server (2) by making connection to the responding server (2) using the responding server's unique name;
upon communication request by the responding server (2), the initiating server (1) providing the initiating client's public key to the responding server (2);
the responding server (2) authenticating the initiating client (3) with the initiating client's public key, and if authentication succeeds, the responding server (2) continuing communication between the responding server (2) and the initiating client (3);
upon communication request by the initiating client (3), the responding server (2) providing the responding client's public key to the initiating client (3); and
the initiating client (3) authenticating the responding client (4) with the responding client's public key, and if authentication succeeds, the initiating client (3) continuing communication between the initiating client (3) and the responding client (4).

2. The method as claimed in claim 1, wherein the step of providing the initiating client's public key to the responding server (2) further comprises steps of:
connecting the responding server (2) by the initiating client (3) with the responding server's unique name;
providing the initiating server's unique name and an initiating account ID of the initiating account by the initiating client (3) to the responding server (2);
connecting the initiating server (1) by the responding server (2) with the initiating server's unique name;
providing the initiating account ID by the responding server (2) to the initiating server (1) to request the initiating client's public key; and
providing the initiating client's public key by the initiating server (1) to the responding server (2).

3. The method as claimed in claim 2, further comprising steps of:
providing a responding account ID of the responding account and an initiating name to be recognized by the responding user, by the initiating client (3) to the responding server (2);
based on the responding account ID, providing the responding client's public key by the responding server (2) to the initiating client (3);
based on the responding account ID, providing the initiating name, an initiating IP address of the initiating client (3) and the initiating client's public key by the responding server (2) to the responding client (4);
if the responding user agrees to communicate with the initiating user based on the initiating name, connecting the initiating client (3) by the responding client (4) with the initiating IP address, and otherwise, terminating all processes of the electronic communication system;
authenticating the responding client (4) by the initiating client (3) with the responding client's public key, and if authentication fails, terminating all the processes of the electronic communication system; and
authenticating the initiating client (3) by the responding client (4) with the initiating client's public key, and if authentication fails, terminating all the processes of the electronic communication system, and otherwise, continuing communication between the initiating client (3) and the responding client (4) by the responding client (4).

4. The method as claimed in claim 1, wherein
the step of providing the responding client's public key to the initiating client (3) further comprises steps of:
providing the responding server's unique name, a responding account ID of the responding account and an initiating name to be recognized by the responding user, by the initiating client (3) to the initiating server (1);
connecting the responding server (2) by the initiating server (1) with the responding server's unique name;
providing the responding account ID, the initiating name, an initiating IP address of the initiating client (3) and the initiating client's public key by the initiating server (1) to the responding server (2);
based on the responding account ID, providing the responding client's public key by the responding server (2) to the initiating server (1);
providing the responding client's public key by the initiating server (1) to the initiating client (3);
based on the responding account ID, providing the initiating name, the initiating IP address and the initiating client's public key by the responding server (2) to the responding client (4);
if the responding user agrees to communicate with the initiating user based on the initiating name, connecting the initiating client (3) by the responding client (4) with the initiating IP address; otherwise, terminating all the processes of the electronic communication systems;
authenticating the responding client (4) by the initiating client (3) with the responding client's public key, and if authentication fails, terminating all the processes of the electronic communication system;
authenticating the initiating client (3) by the responding client (4) with the initiating client's public key, if authentication fails, terminating all the processes of the electronic communication system, and otherwise, continuing communication between the initiating client (3) and the responding client (4) by the responding client (4).

5. The method as claimed in claim 1, wherein
the step of providing the responding client's public key to the initiating client (3) further comprises steps of:
providing the responding server's unique name, a responding account ID and an initiating name to be recognized by the responding user, by the initiating client (3) to the initiating server (1);
connecting the responding server (2) by the initiating server (1) with the responding server's unique name;
providing the responding account ID, the initiating name and the initiating server's unique name by the initiating server (1) to the responding server (2);
based on the responding account ID, providing the responding client's public key by the responding server (2) to the initiating server (1);
based on the responding account ID, providing the initiating name and the initiating server's unique name by the responding server (2) to the responding client (4);
if the responding user agrees to communicate with the initiating server (1) based on the initiating name, connecting the initiating server (1) by the responding client (4) with the initiating server's unique name, and otherwise, terminating all the processes of the electronic communication system;
authenticating the responding client (4) by the initiating server (1) with the responding client's public key, if authentication fails, terminating all the processes of the electronic communication system, and otherwise, continuing communication between the initiating server (1) and the responding client (4) by the initiating server (1).

6. The method as claimed in claim 1, further comprising steps of:
providing data, the responding server's unique name, a responding account ID and an initiating name to be recognized by the responding user, by the initiating client (3) to the initiating server (1);
connecting the responding server (2) by the initiating server (1) with the responding server's unique name;
providing the data, the responding account ID, and the initiating name by the initiating server (1) to the responding server (2);
based on the responding account ID, providing the data and the initiating name by the responding server (2) to the responding client (4).

## Patentansprüche

1. Verfahren, welches es ermöglicht, dass eine Kommunikation in einer offenen Umgebung durchgeführt wird, wobei das Verfahren mittels eines elektronischen Kommunikationssystems durchgeführt wird, welches eine initiierende Client-Vorrichtung (3), einen initiierenden Server (1), eine antwortende Client-Vorrichtung (4) und einen antwortenden Server (2) aufweist, wobei:
die initiierende Client-Vorrichtung (3) eine lokale Kommunikationsvorrichtung ist und von einem initiierenden Nutzer verwendet wird, welcher ein initiierendes Konto hat, welches mittels des initiierenden Servers (1) als ein Server-Computer verwaltet wird,
die antwortende Client-Vorrichtung (4) eine weitere lokale Kommunikationsvorrichtung ist und von einem antwortenden Nutzer verwendet wird, welcher ein antwortendes Konto hat, welches mittels des antwortenden Servers (2) als ein Server-Computer verwaltet wird,
der initiierende Server (1), der antwortende Server (2), die initiierende Client-Vorrichtung (3) und die antwortende Client-Vorrichtung (4) mit Kommunikationsnetzwerken verbunden sind,
jeder von dem initiierenden Server (1), der antwortenden Server (2), der initiierenden Client-Vorrichtung (3) und der antwortenden Client-Vorrichtung (4) ein privat-öffentliches Schlüsselpaar hat,
der initiierende Server (1) einen eindeutigen Namen hat, welcher zugewiesen und bei Behörden registriert ist, zum Herstellen einer Verbindung mit dem initiierenden Server (1), und
der antwortende Server (2) einen eindeutigen Namen hat, welcher zugewiesen und bei den Behörden registriert ist, zum Herstellen einer Verbindung mit dem antwortenden Server (2),
wobei das Verfahren die folgenden Schritte aufweist:
die initiierende Client-Vorrichtung (3) stellt dem initiierenden Server (1) einen öffentlichen Schlüssel des privat-öffentlichen Schlüsselpaares der initiierenden Client-Vorrichtung bereit, mittels Herstellens einer Verbindung zu dem initiierenden Server (1) unter Verwenden des eindeutigen Namens des initiierenden Servers,
die antwortende Client-Vorrichtung (4) stellt dem antwortenden Server (2) einen öffentlichen Schlüssel des privat-öffentlichen Schlüsselpaares der antwortenden Client-Vorrichtung bereit, mittels Herstellens einer Verbindung zu dem antwortenden Server (2) unter Verwenden des eindeutigen Namens des antwortenden Servers,
bei Kommunikationsanforderung mittels des antwortenden Servers (2), stellt der initiierende Server (1) dem antwortenden Server (2) den öffentlichen Schlüssel der antwortenden Client-Vorrichtung bereit,
der antwortende Server (2) authentifiziert die initiierende Client-Vorrichtung mit dem öffentlichen Schlüssel der initiierenden Client-Vorrichtung, und, wenn die Authentifizierung erfolgreich ist, setzt der antwortende Server (2) die Kommunikation zwischen dem antwortenden Server (2) und der initiierenden Client-Vorrichtung (3) fort,
bei Kommunikationsanforderung mittels der initiierenden Client-Vorrichtung (3), stellt der antwortende Server (2) der initiierenden Client-Vorrichtung (3) den öffentlichen Schlüssel der antwortenden Client-Vorrichtung bereit, und
die initiierende Client-Vorrichtung (3) authentifiziert die antwortende Client-Vorrichtung (4) mit dem öffentlichen Schlüssel der antwortenden Client-Vorrichtung, und, wenn die Authentifizierung erfolgreich ist, setzt die initiierende Client-Vorrichtung (3) die Kommunikation zwischen der initiierenden Client-Vorrichtung (3) und der antwortenden Client-Vorrichtung (4) fort.

2. Verfahren gemäß Anspruch 1, wobei der Schritt des Bereitstellens des öffentlichen Schlüssels der initiierenden Client-Vorrichtung an den antwortenden Server (2) ferner die folgenden Schritte aufweist:
Verbinden des antwortenden Servers (2) mittels der initiierenden Client-Vorrichtung (3) mit dem eindeutigen Namen des antwortenden Servers,
Bereitstellen des eindeutigen Namens des initiierenden Servers und einer Initiierendes-Konto-ID des initiierenden Kontos mittels der initiierenden Client-Vorrichtung (3) an den antwortenden Server (2),
Verbinden des initiierenden Servers (1) mittels des antwortenden Servers (2) mit dem eindeutigen Namen des initiierenden Servers,
Bereitstellen der Initiierendes-Konto-ID mittels des antwortenden Servers (2) an den initiierenden Server (1), um den öffentlichen Schlüssel der initiierenden Client-Vorrichtung anzufordern, und
Bereitstellen des öffentlichen Schlüssels der initiierenden Client-Vorrichtung mittels des initiierenden Servers (1) an den antwortenden Server (2).

3. Verfahren gemäß Anspruch 2, welches ferner die folgenden Schritte aufweist:
Bereitstellen einer Antwortendes-Konto-ID des antwortenden Kontos und eines initiierenden Namens, welcher von dem antwortenden Nutzer zu erkennen ist, mittels der initiierenden Client-Vorrichtung (3) an den antwortenden Server (2),
basierend auf der Antwortendes-Konto-ID, Bereitstellen des öffentlichen Schlüssels der antwortenden Client-Vorrichtung mittels des antwortenden Servers (2) an die initiierende Client-Vorrichtung (3),
basierend auf der Antwortendes-Konto-ID, Bereitstellen des initiierenden Namens, einer initiierenden IP-Adresse der initiierenden Client-Vorrichtung (3) und des öffentlichen Schlüssels der initiierenden Client-Vorrichtung mittels des antwortenden Servers (2) an die antwortende Client-Vorrichtung (4),
wenn der antwortende Nutzer zustimmt, mit dem initiierenden Nutzer zu kommunizieren, basierend auf dem initiierenden Namen, Verbinden der initiierenden Client-Vorrichtung (3) mittels der antwortenden Client-Vorrichtung (4) mit der initiierenden IP-Adresse, und anderenfalls, Beenden aller Prozesse des elektronischen Kommunikationssystems,
Authentifizieren der antwortenden Client-Vorrichtung (4) mittels der initiierenden Client-Vorrichtung (3) mit dem öffentlichen Schlüssel der antwortenden Client-Vorrichtung, und, falls die Authentifizierung fehlschlägt, Beenden aller Prozesse des elektronischen Kommunikationssystems, und
Authentifizieren der initiierenden Client-Vorrichtung (3) mittels der antwortenden Client-Vorrichtung (4) mit dem öffentlichen Schlüssel der initiierenden Client-Vorrichtung, und, falls die Authentifizierung fehlschlägt, Beenden aller Prozesse des elektronischen Kommunikationssystems, und anderenfalls, Fortsetzen der Kommunikation zwischen der initiierenden Client-Vorrichtung (3) und der antwortenden Client-Vorrichtung (4) mittels der antwortenden Client-Vorrichtung (4).

4. Verfahren gemäß Anspruch 1, wobei der Schritt des Bereitstellens des öffentlichen Schlüssels der antwortenden Client-Vorrichtung an die initiierende Client-Vorrichtung (3) ferner die folgenden Schritte aufweist:
Bereitstellen des eindeutigen Namens des antwortenden Servers, einer Antwortendes-Konto-ID des antwortenden Kontos und eines initiierenden Namens, welcher von dem antwortenden Nutzer zu erkennen ist, mittels der initiierenden Client-Vorrichtung (3) an den initiierenden Server (1),
Verbinden des antwortenden Servers (2) mittels des initiierenden Servers (1) mit dem eindeutigen Namen des antwortenden Servers,
Bereitstellen der Antwortendes-Konto-ID, des initiierenden Namens, einer initiierenden IP-Adresse der initiierenden Client-Vorrichtung (3) und des öffentlichen Schlüssels der initiierenden Client-Vorrichtung mittels des initiierenden Servers (1) an den antwortenden Server (2),
basierend auf der Antwortendes-Konto-ID, Bereitstellen des öffentlichen Schlüssels der antwortenden Client-Vorrichtung mittels des antwortenden Servers (2) an den initiierenden Server (1),
Bereitstellen des öffentlichen Schlüssels der antwortenden Client-Vorrichtung mittels des initiierenden Servers (1) an die initiierende Client-Vorrichtung (3),
basierend auf der Antwortendes-Konto-ID, Bereitstellen des initiierenden Namens, der initiierenden IP-Adresse und des öffentlichen Schlüssels der initiierenden Client-Vorrichtung mittels des antwortenden Servers (2) an die antwortende Client-Vorrichtung (4),
wenn der antwortende Nutzer zustimmt, mit dem initiierenden Nutzer zu kommunizieren, basierend auf dem initiierenden Namen, Verbinden der initiierenden Client-Vorrichtung (3) mittels der antwortenden Client-Vorrichtung (4) mit der initiierenden IP-Adresse, anderenfalls, Beenden aller Prozesse des elektronischen Kommunikationssystems,
Authentifizieren der antwortenden Client-Vorrichtung (4) mittels der initiierenden Client-Vorrichtung (3) mit dem öffentlichen Schlüssel der antwortenden Client-Vorrichtung, und wenn die Authentifizierung fehlschlägt, Beenden aller Prozesse des elektronischen Kommunikationssystems,
Authentifizieren der initiierenden Client-Vorrichtung (3) mittels der antwortenden Client-Vorrichtung (4) mit dem öffentlichen Schlüssel der initiierenden Client-Vorrichtung, wobei, wenn die Authentifizierung fehlschlägt, Beenden aller Prozesse des elektronischen Kommunikationssystems, und anderenfalls, Fortsetzen der Kommunikation zwischen der initiierenden Client-Vorrichtung (3) und der antwortenden Client-Vorrichtung (4) mittels der antwortenden Client-Vorrichtung (4).

5. Verfahren gemäß Anspruch 1, wobei der Schritt des Bereitstellens des öffentlichen Schlüssels der antwortenden Client-Vorrichtung an die initiierende Client-Vorrichtung (3) ferner die folgenden Schritte aufweist:
Bereitstellen des eindeutigen Namens des antwortenden Servers, einer Antwortendes-Konto-ID und eines initiierenden Namens, welcher von dem antwortenden Nutzer zu erkennen ist, mittels der initiierenden Client-Vorrichtung (3) an den initiierenden Server (1),
Verbinden des antwortenden Servers (2) mittels des initiierenden Servers (1) mit dem eindeutigen Namen des antwortenden Servers,
Bereitstellen der Antwortendes-Konto-ID, des initiierenden Namens und des eindeutigen Namens des initiierenden Servers mittels des initiierenden Servers (1) an den antwortenden Server (2),
basierend auf der Antwortendes-Konto-ID, Bereitstellen des öffentlichen Schlüssels der antwortenden Client-Vorrichtung mittels des antwortenden Servers (2) an den initiierenden Server (1),
basierend auf der Antwortendes-Konto-ID, Bereitstellen des initiierenden Namens und des eindeutigen Namens des initiierenden Servers mittels des antwortenden Servers (2) an die antwortende Client-Vorrichtung (4),
wenn der antwortende Nutzer zustimmt, mit dem initiierenden Server (1) zu kommunizieren, basierend auf dem initiierenden Namen, Verbinden des initiierenden Servers (1) mittels der antwortenden Client-Vorrichtung (4) mit dem eindeutigen Namen des initiierenden Servers, und anderenfalls, Beenden aller Prozesse des elektronischen Kommunikationssystems,
Authentifizieren der antwortenden Client-Vorrichtung (4) mittels des initiierenden Servers (1) mit dem öffentlichen Schlüssel der antwortenden Client-Vorrichtung, wobei, wenn die Authentifizierung fehlschlägt, Beenden aller Prozesse des elektronischen Kommunikationssystems, und anderenfalls, Fortsetzen der Kommunikation zwischen dem initiierenden Server (1) und der antwortenden Client-Vorrichtung (4) mittels des initiierenden Servers (1).

6. Verfahren gemäß Anspruch 1, welches ferner die folgenden Schritte aufweist:
Bereitstellen von Daten, des eindeutigen Namens des antwortenden Servers, einer Antwortendes-Konto-ID und eines initiierenden Namens, welcher von dem antwortenden Nutzer zu erkennen ist, mittels der initiierenden Client-Vorrichtung (3) an den initiierenden Server (1),
Verbinden des antwortenden Servers (2) mittels des initiierenden Servers (1) mit dem eindeutigen Namen des antwortenden Servers,
Bereitstellen der Daten, der Antwortendes-Konto-ID und des initiierenden Namens mittels des initiierenden Servers (1) an den antwortenden Server (2),
basierend auf der Antwortendes-Konto-ID, Bereitstellen der Daten und des initiierenden Namens mittels des antwortenden Servers (2) an die antwortende Client-Vorrichtung (4).

## Revendications

1. Procédé permettant la réalisation d'une communication dans un environnement ouvert, le procédé étant réalisé par un système de communication électronique qui comprend un client initiant (3), un serveur initiant (1), un client répondant (4) et un serveur répondant (2), dans lequel le client initiant (3) est un dispositif de communication local et est utilisé par un utilisateur initiant doté d'un compte initiant administré par le serveur initiant (1) comme un ordinateur serveur, le client répondant (4) est un autre dispositif de communication local et est utilisé par un utilisateur répondant, doté d'un compte répondant administré par le serveur répondant (2) comme un ordinateur serveur, le serveur initiant (1), le serveur répondant (2), le client initiant (3) et le client répondant (4) sont connectés à des réseaux de communication, chacun du serveur initiant (1), du serveur répondant (2), du client initiant (3) et du client répondant (4) dispose d'une paire de clés privée-publique, le serveur initiant (1) présente un nom unique attribué et enregistré auprès des autorités pour se connecteur au serveur initiant (1) et le serveur répondant (2) présente un nom unique attribué et enregistré auprès des autorités pour se connecter au serveur répondant (2), dans lequel
le procédé comprend les étapes suivantes :
le client initiant (3) fournit une clé publique de client initiant, de la paire de clé privée-publique du client initiant au serveur initiant (1) en se connectant au serveur initiant (1) en utilisant le nom unique du serveur initiant ;
le client répondant (4) fournit une clé publique de client répondant, de la paire de clé privée-publique du client répondant au serveur répondant (2) en se connectant au serveur répondant (2) en utilisant le nom unique du serveur répondant ;
lors d'une demande de communication par le serveur répondant (2), le serveur initiant (1) fournit la clé publique de client initiant au serveur répondant (2) ;
le serveur répondant (2) authentifie le client (3) avec la clé publique de client initiant, et si l'authentification est un succès, le serveur répondant (2) poursuit la communication entre le serveur répondant (2) et le client initiant (3) ;
lors d'une demande de communication par le serveur initiant (3), le serveur répondant (2) fournit la clé publique de client répondant au client initiant (3) ; et
le client initiant (3) authentifie le client répondant (4) avec la clé publique de client répondant, et si l'authentification est un succès, le client initiant (3) poursuit la communication entre le client initiant (3) et le client répondant (4).

2. Procédé selon la revendication 1, dans lequel l'étape consistant à fournir la clé publique de client initiant au serveur répondant (2) comprend en outre les étapes consistant à :
se connecter au serveur répondant (2) par le client initiant (3) avec le nom unique du serveur répondant ;
fournir le nom unique du serveur initiant et un identifiant de compte initiant du compte initiant par le client initiant (3) au serveur répondant (2) ;
se connecter au serveur initiant (1) par le serveur répondant (2) avec le nom unique du serveur initiant ;
fournir l'identifiant du compte initiant par le serveur répondant (2) au serveur initiant (1) pour demander la clé publique du client initiant ; et
fournir la clé publique du client initiant par le serveur initiant (1) au serveur répondant (2).

3. Procédé selon la revendication 2, comprenant en outre les étapes consistant à :
fournir un identifiant de compte répondant du compte répondant et un nom initiant à reconnaître par l'utilisateur répondant, par le client initiant (3) au serveur répondant (2) ;
sur la base de l'identifiant de compte répondant, fournir la clé publique du client répondant par le serveur répondant (2) au client initiant (3) ;
sur la base de l'identifiant de compte répondant, fournir le nom initiant, une adresse IP initiante du client initiant (3) et la clé publique du client initiant par le serveur répondant (2) au client répondant (4) ;
si l'utilisateur répondant accepte de communiquer avec l'utilisateur initiant sur la base du nom initiant, se connecter au client initiant (3) par le client répondant (4) avec l'adresse IP initiante, et autrement, mettre fin à tous les processus du système de communication électronique ;
authentifier le client répondant (4) par le client initiant (3) avec la clé publique du client répondant, et si l'authentification échoue, mettre fin à tous les processus du système de communication électronique ; et
authentifier le client initiant (3) par le client répondant (4) avec la clé publique de client initiant, et si l'authentification échoue, mettre fin à tous les processus du système de communication électronique, et autrement, poursuivre la communication entre le client initiant (3) et le client répondant (4) par le client répondant (4).

4. Procédé selon la revendication 1, dans lequel l'étape consistant à fournir la clé publique de client répondant au client initiant (3) comprend en outre les étapes consistant à :
fournir un nom unique de serveur répondant, un identifiant de compte répondant du compte répondant et un nom initiant à reconnaître par l'utilisateur répondant, par le client initiant (3) au serveur initiant (1) ;
se connecter au serveur répondant (2) par le serveur initiant (1) avec le nom unique du serveur répondant ;
fournir l'identifiant de compte répondant, le nom initiant, une adresse IP initiante du client initiant (3) et la clé publique du client initiant par le serveur initiant (1) au serveur répondant (2) ;
sur la base de l'identifiant de compte répondant, fournir la clé publique du client répondant par le serveur répondant (2) au serveur initiant (1) ;
fournir la clé publique du client répondant par le serveur initiant (1) au client initiant (3) ;
sur la base de l'identifiant de compte répondant, fournir le nom initiant, l'adresse IP initiante et la clé publique du client initiant par le serveur répondant (2) au client répondant (4) ;
si l'utilisateur répondant accepte de communiquer avec l'utilisateur initiant sur la base du nom initiant, se connecter au client initiant (3) par le client répondant (4) avec l'adresse IP initiante, et autrement, mettre fin à tous les processus des systèmes de communication électronique ;
authentifier le client répondant (4) par le client initiant (3) avec la clé publique du client répondant, et si l'authentification échoue, mettre fin à tous les processus du système de communication électronique ;
authentifier le client initiant (3) par le client répondant (4) avec la clé publique de client initiant, si l'authentification échoue, mettre fin à tous les processus du système de communication électronique, et autrement, poursuivre la communication entre le client initiant (3) et le client répondant (4) par le client répondant (4).

5. Procédé selon la revendication 1, dans lequel l'étape consistant à fournir la clé publique de client répondant au client initiant (3) comprend en outre les étapes consistant à :
fournir le nom unique de serveur répondant, un identifiant de compte répondant et un nom initiant à reconnaître par l'utilisateur répondant, par le client initiant (3) au serveur initiant (1) ;
se connecter au serveur répondant (2) par le serveur initiant (1) avec le nom unique du serveur répondant ;
fournir l'identifiant de compte répondant, le nom initiant et le nom unique du serveur initiant par le serveur initiant (1) au serveur répondant (2) ;
sur la base de l'identifiant de compte répondant, fournir la clé publique du client répondant par le serveur répondant (2) au serveur initiant (1) ;
sur la base de l'identifiant de compte répondant, fournir le nom initiant et le nom unique du serveur initiant par le serveur répondant (2) au client répondant (4) ;
si l'utilisateur répondant accepte de communiquer avec le serveur initiant (1) sur la base du nom initiant, se connecter au serveur initiant (1) par le client répondant (4) avec le nom unique du serveur initiant, et autrement, mettre fin à tous les processus du système de communication électronique ;
authentifier le client répondant (4) par le serveur initiant (1) avec la clé publique de client répondant, si l'authentification échoue, mettre fin à tous les processus du système de communication électronique, et autrement, poursuivre la communication entre le serveur initiant (1) et le client répondant (4) par le serveur initiant (1).

6. Procédé selon la revendication 1, comprenant en outre les étapes consistant à :
fournir des données, le nom unique de serveur répondant, un identifiant de compte répondant et un nom initiant à reconnaître par l'utilisateur répondant, par le client initiant (3) au serveur initiant (1) ;
se connecter au serveur répondant (2) par le serveur initiant (1) avec le nom unique du serveur répondant ;
fournir les données, l'identifiant de compte répondant et le nom initiant par le serveur initiant (1) au serveur répondant (2) ; sur la base de l'identifiant de compte répondant, fournir les données et le nom initiant par le serveur répondant (2) au client répondant (4).
